# EUROPÄISCHE PATENTSCHRIFT

(11) **EP 3 612 744 B1**
(45) Veröffentlichungstag und Bekanntmachung des Hinweises auf die Patenterteilung: **26.05.2021**
(21) Anmeldenummer: 18742764.6
(22) Anmeldetag: 13.07.2018
(51) Int. Cl.: F16C 27/06, B60K 17/24, F16F 1/373, F16F 1/38

(54) **WELLENLAGER**
SHAFT BEARING
PALIER POUR ARBRE

(30) Priorität: 19.07.2017 DE 102017116324
(43) Veröffentlichungstag der Anmeldung: 26.02.2020
(73) Patentinhaber: Vibracoustic SE, 64293 Darmstadt (DE)
(72) Erfinder: BACK, Friedrich, 79379 Müllheim (DE)
(74) Vertreter: Patentanwälte Olbricht Buchhold Keulertz
(86) Internationale Anmeldenummer: PCT/EP2018/069178
(87) Internationale Veröffentlichungsnummer: WO 2019/016107

(56) Entgegenhaltungen:
- DE-A1-102014 107 477
- DE-A1-102014 110 816
- FR-A1- 2 779 193
- JP-A- 2013 099 995
- US-A- 3 639 015

## Beschreibung

Die Erfindung betrifft ein Wellenlager zur Lagerung einer Welle, insbesondere einer Antriebswelle eines Kraftfahrzeuges, aufweisend eine Innenhülse, einen die Innenhülse unter Ausbildung eines Abstands umgebenden Außenkörper und einen Elastomerkörper, der die Innenhülse und den Außenkörper elastisch miteinander verbindet.

Ein Wellenlager der eingangs genannten Art wird zur Lagerung einer Welle, insbesondere einer Antriebswelle, wie beispielsweise einer Kardanwelle, eines Kraftfahrzeuges verwendet, um die während des Fahrbetriebs an der Welle auftretenden Schwingungen zu dämpfen und/oder zu isolieren. Ferner dient das Wellenlager dazu, die Welle während des Fahrbetriebs in Position zu halten und axiale Verschiebungen beim Anfahren und Bremsen aufzunehmen und zudem Geräusche, Resonanzfrequenzen und Taumelbewegungen der Welle zu dämpfen und/oder zu isolieren.

Das Wellenlager ist über den Außenkörper mit einem Kraftfahrzeugteil, wie beispielsweise einem Kraftfahrzeugboden oder einer Kraftfahrzeugkarosserie, und über ein als Wälzlager ausgebildetes Lagerelement mit der Antriebswelle verbunden. Das Lagerelement kann unmittelbar an den Elastomerkörper anvulkanisiert sein oder kann in eine von der Innenhülse gebildete Aufnahmeöffnung eingepresst sein. Zur Erhöhung der Haftreibung zwischen der Innenhülse und dem Wälzlager ist die Innenhülse gummiert, indem sie in den Elastomerkörper eingebettet ist. Die Gummierung dient zum Toleranzausgleich und garantiert den Festsitz des Lagerelements, ohne jedoch zu viel Spannung in das Lagerelement einzuleiten.

Aus DE 10 2014 107 477 A1 und DE 10 2014 110 816 B4 sind Wellenlager bekannt, die einen Außenkörper, eine Innenhülse und einen den Außenkörper und die Innenhülse miteinander verbindenden Elastomerkörper aufweisen. Die Innenhülse ist in den Elastomerkörper eingebettet und weist einen radial einwärts umgebogenen Randabschnitt aufweisen, dessen Innendurchmesser kleiner ist als der Außendurchmesser eines Lagerelements. Dadurch dient der umgebogene Randabschnitt als Anschlag beim Einpressen des Lagerelements.

JP 2013 099995 A beschreibt ein Wellenlager mit einer Halterung, einem äußeren Ring und einem inneren Ring, welche mittels eines Elastomerkörpers verbunden sind. Der innere Ring umfasst den Außenlauf eines Kugellagers. Der innere Ring weist radial einwärts abragende Vorsprünge auf, die von einer Elastomerschicht überzogen sind.

Der vorliegenden Erfindung liegt die Aufgabe zugrunde, ein Wellenlager zu schaffen, das eine erhöhte Auspresskraft zum Auspressen eines Lagerelementes aufweist, ohne gleichzeitig die Spannung auf das Lagerelement zu erhöhen.

Zur Lösung der Aufgabe wird ein Wellenlager mit den Merkmalen des Anspruchs 1 vorgeschlagen.

Vorteilhafte Ausgestaltungen des Wellenlagers sind Gegenstand der abhängigen Ansprüche.

Ein Wellenlager zur Lagerung einer Welle, insbesondere einer Antriebswelle eines Kraftfahrzeugs, weist eine Innenhülse, einen die Innenhülse unter Ausbildung eines Abstands umgebenden Außenkörper, einen Elastomerkörper, der die Innenhülse und den Außenkörper elastisch miteinander verbindet, und ein Lagerelement auf, wobei die Innenhülse in den Elastomerkörper eingebettet ist und eine Aufnahmeöffnung zum Einpressen eines Lagerelements bildet, wobei die Innenhülse wenigstens eine erste Umformung aufweist, die derart radial nach innen gerichtet ist, dass zwischen der ersten Umformung und dem Lagerelement ein Scherspalt gebildet ist, wobei ein Innendurchmesser der ersten Umformung gleich oder größer als ein Außendurchmesser des Lagerelementes ist, wobei beim Einpressen des Lagerelementes in die Aufnahmeöffnung, das Elastomer des Elastomerkörpers verdrängt wird und entgegen der Einpressrichtung einen Elastomerwulst innerhalb des Scherspalts gebildet wird, wobei innerhalb des Scherspaltes ein beim Einpressen des Lagerelementes gebildeter Elastomerwulst komprimierbar ist.

Es ist erkannt worden, dass beim Einpressen eines Lagerelementes in die Aufnahmeöffnung, das Elastomer verdrängt wird und gegen die Einpressrichtung einen Elastomerwulst bildet. Der zwischen der ersten Umformung und dem Lagerelement gebildete Scherspalt verhindert beim Auspressen des Lagerelementes aus der Aufnahmeöffnung, dass der Elastomerwulst weggeschoben wird. Vielmehr wird der Elastomerwulst im Scherspalt komprimiert. Dadurch ist der Widerstand gegen das Auspressen des Lagerelements stark erhöht. Somit wirkt die erste Umformung wie eine Rücklaufsperre, indem sie ein Wegschieben des Elastomerwulstes verhindert. Folglich wird auf einfache und kostengünstige Weise durch vorteilhafte Gestaltung der Zwischenhülse die Auspresskraft durch den Widerstand stark erhöht und somit der Festsitz des Lagerelementes verbessert. Dadurch kann zur Kosten- und Gewichtsreduktion ein Lagerelement, insbesondere Wälzlager, eingesetzt werden, dessen Pressfläche verringert ist. Darüber hinaus verhindert der Scherspalt ein Abfallen der Auspresskräfte, insbesondere unter Temperatureinfluss, in kritische Bereiche.

Der Elastomerkörper des Wellenlagers weist vorteilhaft einen ersten Schenkel und einen zweiten Schenkel auf, die über eine Falte elastisch miteinander verbunden sind. Bevorzugt ist in dem radial nach innen gerichteten ersten Schenkel die Innenhülse eingebettet. Der erste Schenkel liegt dabei an dem Lagerelement und der radial nach außen gerichtete zweite Schenkel liegt an dem Außenkörper an. Vorteilhaft ist der zweite Schenkel formschlüssig, kraftschlüssig und/oder stoffschlüssig mit dem Außenkörper verbunden. Vorteilhaft ragt der zweite Schenkel nach der Vulkanisation des Elastomerkörpers in einem Winkel von dem ersten Schenkel ab, so dass der Elastomerkörper beim Einsetzen, insbesondere Einpressen, in eine Öffnung des Außenkörpers mit Vorspannung an dem Außenkörper anliegt. Nach dem Einsetzen des Elastomerkörpers sind beide Schenkel vorteilhaft parallel zueinander ausgerichtet.

Der Außenkörper kann als eine Hülse, ein Ring oder ein Lagerträger ausgebildet sein. Über den Außenkörper erfolgt die Befestigung des Wellenlagers an einem Kraftfahrzeugteil, wie beispielsweise einer Kraftfahrzeugkarosserie oder einem Kraftfahrzeugboden. Der Außenkörper kann aus Metall oder Kunststoff, insbesondere faserverstärktem Kunststoff sein.

Die Innenhülse kann aus Metall oder Kunststoff, insbesondere faserverstärktem Kunststoff sein. Ferner kann die Innenhülse mit Öffnungen versehen sein, die von dem Elastomer des Elastomerkörpers durchdrungen sind.

Das Lagerelement kann ein Wälzlager sein, das in die von der Innenhülse gebildete Aufnahmeöffnung eingepresst ist. Das Wälzlager umfängt die zu lagernde Welle, insbesondere die Antriebswelle. Beim Einpressen des Wälzlagers in die Aufnahmeöffnung wird das Elastomer des Elastomerkörpers verdrängt und bildet einen Elastomerwulst entgegen der Einpressrichtung innerhalb des Scherspalts aus.

In der erfindungsgemäßen Ausgestaltung ist ein Innendurchmesser der ersten Umformung gleich oder größer als ein Außendurchmesser des Lagerelements. Da der Innendurchmesser der ersten Umformung gleich oder größer als ein Außendurchmesser des Lagerelements ist, wird zwischen der ersten Umformung und dem Lagerelement ein Scherspalt gebildet, wodurch beim Auspressen des Lagerelementes aus der Aufnahmeöffnung der Elastomerwulst nicht weggeschoben wird, sondern sich im Scherspalt komprimiert. Dadurch ist der Widerstand gegen das Auspressen stark erhöht. Der Innendurchmesser der ersten Umformung und der Außendurchmesser des Lagerelementes beziehen sich auf die Mittelachse des Wellenlagers.

In einer vorteilhaften Ausgestaltung weist die Innenhülse zwei erste Umformungen auf. Insbesondere sind die beiden ersten Umformungen derart voneinander beabstandet, dass dazwischen das Lagerelement anordenbar ist, wobei zwischen jeder ersten Umformung und dem Lagerelement ein Scherspalt gebildet ist.

In einer vorteilhaften Ausgestaltung ist in den Elastomerkörper eine Außenhülse eingebettet, die eine zweite Umformung aufweist, die derart radial nach außen gerichtet ist, dass zwischen der zweiten Umformung und dem Außenkörper ein Scherspalt gebildet ist, wobei innerhalb des Scherspaltes ein beim Einpressen des Elastomerkörpers in den Außenkörper gebildeter Elastomerwulst komprimierbar ist. Der zwischen dem Außenkörper und der Außenhülse gebildete Scherspalt verhindert beim Auspressen des Elastomerkörpers aus dem Außenkörper, dass der Elastomerwulst innerhalb des Scherspaltes weggeschoben wird, da der Elastomerwulst innerhalb des Scherspaltes komprimiert wird. Dadurch ist der Widerstand gegen das Auspressen des Elastomerkörpers aus dem Außenkörper erhöht. Zudem bewirkt die Außenhülse eine gleichmäßige Flächenpressung und sorgt so für eine gleichmäßige Kräfteverteilung auf den Außenkörper. Zur Erhöhung der Haftreibung zwischen der Außenhülse und dem Außenkörper ist die Außenhülse gummiert, indem sie in den Elastomerkörper eingebettet ist. Die Gummierung dient zum Toleranzausgleich und garantiert den Festsitz des Wellenlagers innerhalb des Außenkörpers. Die Außenhülse ist vorteilhaft in dem radial nach außen gerichteten zweiten Schenkel des Elastomerkörpers eingebettet. Die Außenhülse kann aus Metall oder Kunststoff, insbesondere faserverstärktem Kunststoff sein. Ferner kann die Außenhülse mit Öffnungen versehen sein, die von dem Elastomer des Elastomerkörpers durchdrungen sind.

In einer vorteilhaften Ausgestaltung ist ein Außendurchmesser der zweiten Umformung gleich oder kleiner als ein Innendurchmesser des Außenkörpers. Da der Außendurchmesser der zweiten Umformung gleich oder kleiner als ein Innendurchmesser des Außenkörpers ist, wird zwischen der zweiten Umformung und dem Außenkörper ein Scherspalt gebildet, wodurch der beim Einpressen des Elastomerelements in den Außenkörper gebildete Elastomerwulst beim Auspressen des Elastomerkörpers aus dem Außenkörper nicht weggeschoben wird, sondern im Scherspalt komprimiert wird. Dadurch ist der Widerstand gegen das Auspressen stark erhöht. Der Außendurchmesser der zweiten Umformung und der Innendurchmesser des Außenkörpers beziehen sich auf die Mittelachse des Wellenlagers.

In einer vorteilhaften Ausgestaltung weist die Außenhülse zwei zweite Umformungen auf. Bevorzugt sind die beiden zweiten Umformungen derart voneinander beabstandet, dass dazwischen der Außenkörper anordenbar ist, wobei zwischen jeder zweiten Umformung und dem Außenkörper ein Scherspalt gebildet ist.

In einer vorteilhaften Ausgestaltung ist die erste Umformung und/oder die zweite Umformung ein umgebogener Randabschnitt. Weiterhin vorteilhaft ist die erste Umformung ein radial nach innen gerichteter, umgebogener, insbesondere umgebördelter, Randabschnitt der Innenhülse und die zweite Umformung ist ein radial nach außen gerichteter, umgebogener, insbesondere umgebördelter, Randabschnitt der Außenhülse. Ein umgebogener Randabschnitt ist einfach und kostengünstig herstellbar. Wenn die Innenhülse und/oder die Außenhülse aus Metall hergestellt sind, ist der umgebogene Randabschnitt vorteilhaft mittels Umbördeln hergestellt. Wenn die Innenhülse und/oder die Außenhülse aus Kunststoff hergestellt sind, wird der umgebogene Randabschnitt vorteilhaft während des Spritzgießens hergestellt.

In einer vorteilhaften Ausgestaltung ist die erste Umformung und/oder die zweite Umformung eine Sicke. Weiterhin vorteilhaft ist die erste Umformung eine radial nach innen gerichtete Sicke und die zweite Umformung ist eine radial nach außen gerichtete Sicke ist. Vorteilhaft schließt sich an die als Sicke ausgebildete Umformung ein hülsenförmiger Fortsatz der Innenhülse und/oder der Außenhülse an, dessen Innendurchmesser größer, kleiner oder gleich dem Innendurchmesser der Innenhülse und/oder Außenhülse sein kann. Vorteilhaft sind die hülsenförmigen Fortsätze materialeinheitlich mit der Innenhülse und/oder der Außenhülse verbunden.

In einer vorteilhaften Ausgestaltung ist die erste Umformung und/oder die zweite Umformung aus Abschnitten gebildet, die teilweise ausgestanzt und umgebogen sind. Weiterhin vorteilhaft ist die erste Umformung aus teilweise ausgestanzten, radial nach innen gebogenen Abschnitten gebildet und die zweite Umformung ist aus teilweise ausgestanzten, radial nach außen gebogenen Abschnitten gebildet. Die teilweise ausgestanzten und umgebogenen Abschnitte sind vorteilhaft in äquidistanten Abständen über den Umfang der Innenhülse und/oder der Außenhülse verteilt.

In einer vorteilhaften Ausgestaltung ist die erste Umformung und/oder die zweite Umformung aus umgebogenen Randlappen gebildet. Weiterhin vorteilhaft ist die erste Umformung aus radial nach innen gebogenen ersten Randlappen gebildet und die zweite Umformung ist aus radial nach außen gebogenen zweiten Randlappen gebildet. Vorteilhaft sind die umgebogenen Randlappen in äquidistanten Abständen über den Umfang der Innenhülse und/oder der Außenhülse angeordnet. Vorteilhaft sind die Randlappen an den Stirnseiten der Innenhülse und/oder der Außenhülse angeordnet und materialeinheitlich mit der Innenhülse und/oder der Außenhülse verbunden. Weiterhin vorteilhaft sind die Randlappen rechteckförmige Vorsprünge der Innenhülse und/oder der Außenhülse.

In einer vorteilhaften Ausgestaltung weist die Innenhülse und/oder die Außenhülse einen umgebogenen Schenkelabschnitt auf, dessen Innendurchmesser größer als ein Außendurchmesser des Lagerelements ist und/oder dessen Außendurchmesser größer als der Innendurchmesser des Außenkörpers ist. Der umgebogene Schenkelabschnitt dient als Anschlag beim Einpressen des Lagerelements in die Aufnahmeöffnung und/oder als Anschlag beim Einpressen des Elastomerkörpers in den Außenkörper.

In einer vorteilhaften Ausgestaltung weist der Elastomerkörper einen Befestigungsabschnitt zum Befestigen des Elastomerkörpers an dem Außenkörper auf. Der Befestigungsabschnitt kann eine in den Elastomerkörper eingebrachte, umlaufende Vertiefung aufweisen, in die ein am Außenkörper abragender Vorsprung eingreift. Ferner kann der Befestigungsabschnitt einen Anlageabschnitt aufweisen, der an einer Stirnfläche des Außenkörpers anliegt.

In einer vorteilhaften Ausgestaltung ist der Befestigungsabschnitt mittels eines Sicherungsrings an dem Außenkörper festgelegt. Der Sicherungsring dient zur Sicherung des Elastomerkörpers und verhindert ein Herausziehen des Elastomerkörpers aus dem Außenkörper. Weiterhin vorteilhaft kann der Sicherungsring einen ersten Befestigungsschenkel und einen zweiten Befestigungsschenkel aufweisen, die zueinander einen Winkel einschließen. Vorteilhaft liegt der erste Befestigungsschenkel an dem Anlageabschnitt an, und der zweite Befestigungsabschnitt liegt an dem Elastomerkörper im Bereich der Vertiefung an. Ferner weist der zweite Befestigungsabschnitt einen umgebogenen Endabschnitt auf, der zum Hintergreifen des von dem Außenkörper abragenden Vorsprungs ausgebildet ist. Der Sicherungsring kann ferner als Sprengring ausgebildet sein. Vorteilhaft wird der Sicherungsring auf den Befestigungsabschnitt aufgepresst, um den Elastomerkörper an dem Außenkörper festzulegen.

Nachfolgend werden ein Wellenlager sowie weitere Merkmale und Vorteile anhand von Ausführungsbeispielen näher erläutert, die in den Figuren schematisch dargestellt sind. Hierbei zeigen:
- Fig. 1: einen Querschnitt durch ein Wellenlager gemäß einer ersten Ausführungsform mit einer Innenhülse und einer Außenhülse gemäß einer ersten Ausführungsform und einem Lagerelement;
- Fig. 2: einen vergrößerte Darstellung der Einzelheit II in Fig. 1;
- Fig. 3: eine vergrößerte Darstellung eines Querschnitts durch die Innenhülse und die Außenhülse der Fig. 1;
- Fig. 4: einen vergrößerte Darstellung eines Querschnitts durch eine Innenhülse und eine Außenhülse gemäß einer zweiten Ausführungsform;
- Fig. 5: einen vergrößerte Darstellung eines Querschnitts durch eine Innenhülse und eine Außenhülse gemäß einer dritten Ausführungsform;
- Fig. 6: einen vergrößerte Darstellung eines Querschnitts durch eine Innenhülse und eine Außenhülse gemäß einer vierten Ausführungsform;
- Fig. 7: einen vergrößerte Darstellung eines Querschnitts durch eine Innenhülse und eine Außenhülse gemäß einer fünften Ausführungsform;
- Fig. 8: einen vergrößerte Darstellung eines Querschnitts durch eine Innenhülse und eine Außenhülse gemäß einer sechsten Ausführungsform;
- Fig. 9: einen vergrößerte Darstellung eines Querschnitts durch eine Innenhülse und eine Außenhülse gemäß einer siebten Ausführungsform;
- Fig. 10: einen vergrößerte Darstellung eines Querschnitts durch eine Innenhülse und eine Außenhülse gemäß einer achten Ausführungsform; und
- Fig. 11: einen Querschnitt durch ein Wellenlager gemäß einer zweiten Ausführungsform ohne Außenkörper mit einer Innenhülse gemäß einer ersten Ausführungsform und einem Lagerelement.

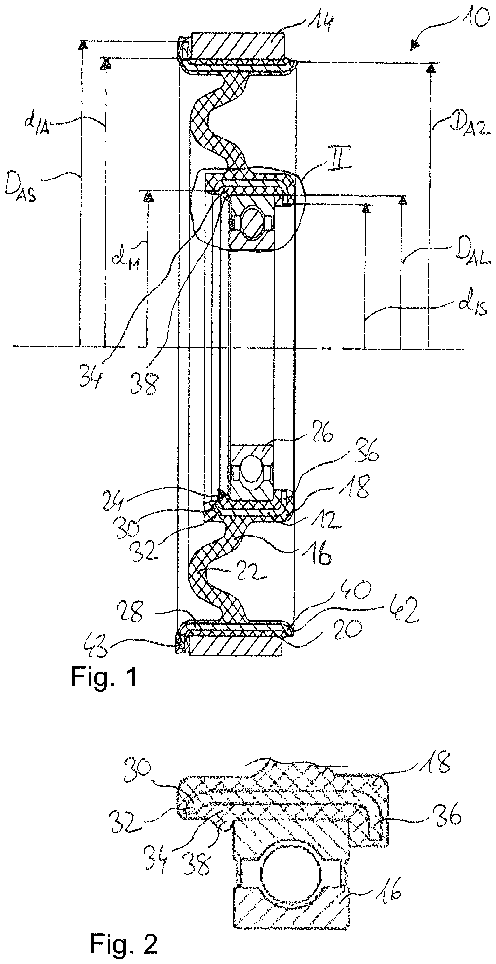

In Figur 1 ist ein Wellenlager 10 gezeigt, das zur Lagerung einer nicht dargestellten Welle, insbesondere einer Antriebswelle, wie beispielsweise einer Kardanwelle, an einem nicht dargestellten Kraftfahrzeugteil, wie beispielsweise einer Kraftfahrzeugkarosserie oder einem Kraftfahrzeugboden, dient.

Das Wellenlager 10 weist eine Innenhülse 12, einen die Innenhülse 12 unter Ausbildung eines Abstands umgebenden Außenkörper 14 und einen Elastomerkörper 16 auf, der die Innenhülse 12 und den Außenkörper 14 elastisch miteinander verbindet.

Der Elastomerkörper 16 weist einen ersten Schenkel 18, einen zweiten Schenkel 20 und eine die beiden Schenkel 18, 20 miteinander verbindende Falte 22 auf.

Die Innenhülse 12 ist in den ersten Schenkel 18 eingebettet, insbesondere einvulkanisiert, und bildet eine Aufnahmeöffnung 24 zur Aufnahme eines Lagerelements 26, das die zu lagernde Welle umfängt. Das Lagerelement 26 ist als ein Wälzlager ausgebildet und in die Aufnahmeöffnung 24 eingepresst.

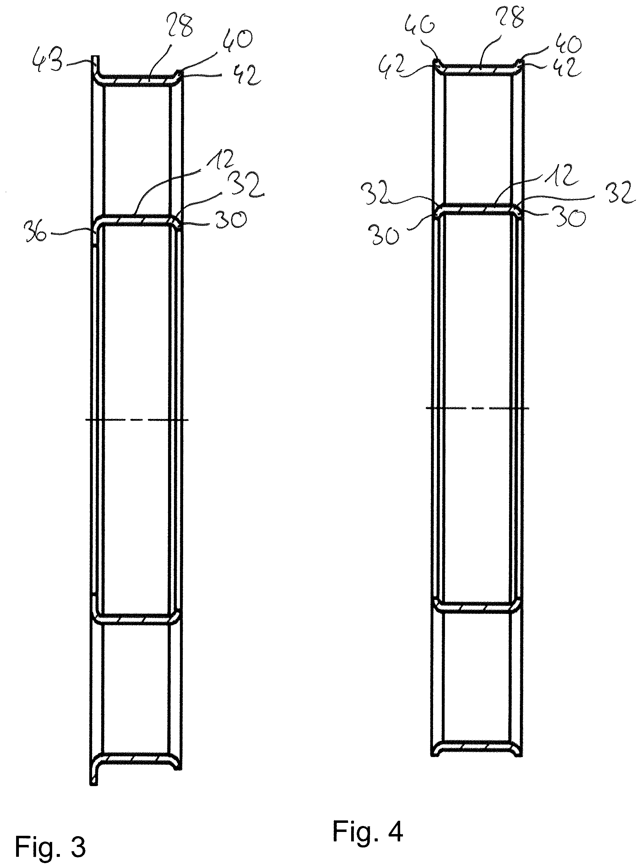

Wie insbesondere in Figur 3 ersichtlich ist, weist die Innenhülse 12 eine erste Umformung 30 auf, die radial nach innen gerichtet ist. Die erste Umformung 30 ist ein radial nach innen gerichteter, umgebogener, insbesondere umgebördelter, erster Randabschnitt 32 der Innenhülse 12. Die erste Umformung 30 weist einen Innendurchmesser d_{I1} auf, der kleiner ist als ein Außendurchmesser D_{AL} des Lagerelements 26, wie in Figur 1 ersichtlich ist. Wie zudem in Figur 2 ersichtlich ist, ist die erste Umformung 30 zu dem Lagerelement 26 beabstandet und bildet einen Scherspalt 34 aus.

An einem der ersten Umformung 30 gegenüberliegenden Ende weist die Innenhülse 12 einen radial nach innen umgebogenen ersten Schenkelabschnitt 36 auf, dessen Innendurchmesser d_{IS} kleiner als der Außendurchmesser D_{AL} des Lagerelements 26 ist. Der erste Schenklabschnitt 36 dient als Anschlag beim Einpressen des Lagerelements 26 in die Aufnahmeöffnung 24.

Die Innenhülse 12 kann aus Metall oder Kunststoff, insbesondere faserverstärktem Kunststoff, hergestellt sein. Ferner kann die Innenhülse 12 nicht dargestellte Öffnungen aufweisen, die von dem Elastomer des Elastomerkörpers 16 durchdrungen sind.

Beim Einpressen des Lagerelementes 26 in die Aufnahmeöffnung 24 wird das Elastomer des Elastomerkörpers 16 verdrängt, wobei sich gegen die Einpressrichtung ein Elastomerwulst 38 innerhalb des Scherspaltes 34 bildet. Beim Auspressen des Lagerelementes 26 aus der Aufnahmeöffnung 24 wird der Elastomerwulst 38 im Scherspalt 34 komprimiert, so dass ein Wegschieben des Elastomerwulstes 38 verhindert wird. Dadurch ist der Widerstand gegen das Auspressen des Lagerelements 26 stark erhöht. Somit wirkt die erste Umformung 30 wie eine Rücklaufsperre, indem sie ein Wegschieben des Elastomerwulstes 38 verhindert.

Der zweite Schenkel 20 liegt an dem Außenkörper 14 an, wobei über den Außenkörper 14 eine Befestigung des Wellenlagers an einem nicht dargestellten Kraftfahrzeugteil erfolgt. Hierzu kann der Außenkörper 14 als Lagerträger ausgebildet sein. Der Elastomerkörper 16 ist in den Außenkörper 14 eingepresst, wobei zur Erhöhung der Flächenpressung eine Außenhülse 28 in den zweiten Schenkel 20 eingebettet, insbesondere einvulkanisiert ist.

Die Außenhülse 28 weist eine zweite Umformung 40 auf, die radial nach außen gerichtet ist. Die zweite Umformung 40 ist ein radial nach außen gerichteter, umgebogener, insbesondere umgebördelter, zweiter Randabschnitt 42 der Innenhülse 12, wie in Fig. 3 ersichtlich ist. Die zweite Umformung 40 weist einen Außendurchmesser D_{A2} auf, der kleiner ist als ein Innendurchmesser d_{IA} des Außenkörpers 14. Die zweite Umformung 40 ist zu dem Außenkörper 14 beabstandet und bildet einen Scherspalt 34 aus.

An einem der zweiten Umformung 40 gegenüberliegenden Ende weist die Außenhülse 28 einen radial nach außen umgebogenen zweiten Schenkelabschnitt 43 auf, dessen Außendurchmesser D_{AS} größer als der Innendurchmesser d_{IA} des Außenkörpers 14 ist. Der zweite Schenkelabschnitt 44 dient als Anschlag beim Einpressen des Elastomerkörpers 16 in den Außenkörper 14.

Beim Einpressen des Elastomerkörpers 16 in den Außenkörper 14 wird das Elastomer des Elastomerkörpers 16 verdrängt, wobei sich gegen die Einpressrichtung ein Elastomerwulst 38 innerhalb des Scherspaltes 34 bildet. Beim Auspressen des Elastomerkörpers 16 aus dem Außenkörper 14 wird der Elastomerwulst 38 im Scherspalt 34 komprimiert, so dass ein Wegschieben des Elastomerwulstes 38 verhindert wird. Dadurch ist der Widerstand gegen das Auspressen des Elastomerkörpers 16 aus dem Außenkörper 14 stark erhöht. Somit wirkt die zweite Umformung 40 wie eine Rücklaufsperre, indem sie ein Wegschieben des Elastomerwulstes 38 verhindert.

Im Folgenden werden weitere Ausführungsformen der Innenhülse 12 und der Außenhülse 28 sowie eine weitere Ausführungsform des Wellenlagers 10 beschrieben, wobei zur Beschreibung die bereits zuvor verwendeten Bezugszeichen für gleiche und funktionsgleiche Teile verwendet werden.

In Figur 4 ist eine zweite Ausführungsform der Innenhülse 12 und der Außenhülse 28 dargestellt, die sich von der ersten Ausführungsform dadurch unterscheidet, dass die Innenhülse 12 zwei erste Umformungen 30 und die Außenhülse 28 zwei zweite Umformungen 40 aufweist. Die beiden ersten Umformungen 30 sind beide als radial nach innen gerichtete, umgebogene, insbesondere umgebördelte, erste Randabschnitte 32 ausgebildet, so dass sich zwischen den beiden ersten Umformungen 30 und dem Lagerelement 26 jeweils ein Scherspalt 34 bildet, der ein Wegschieben eines sich innerhalb eines jeden Scherspaltes 34 gebildeten Elastomerwulstes 38 verhindert. Die beiden zweiten Umformungen 40 sind beide als radial nach außen gerichtete, umgebogene, insbesondere umgebördelte, zweite Randabschnitte 42 ausgebildet, so dass sich zwischen den beiden zweiten Umformungen 40 und dem Außenkörper 14 jeweils ein Scherspalt 34 bildet, der ein Wegschieben eines sich innerhalb eines jeden Scherspaltes 34 gebildeten Elastomerwulstes 38 verhindert.

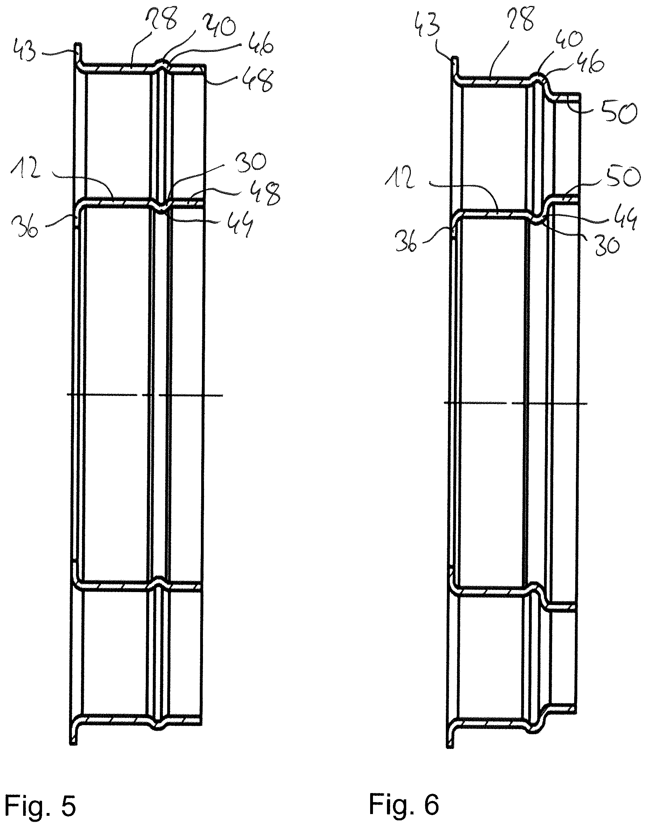

In Figur 5 ist eine dritte Ausführungsform der Innenhülse 12 und des Außenkörpers 14 dargestellt, die sich von den ersten beiden Ausführungsformen dadurch unterscheidet, dass die erste Umformung 30 eine radial nach innen gerichtete erste Sicke 44 und die zweite Umformung 40 eine radial nach außen gerichtete zweite Sicke 46 ist. An jede der Sicken 44, 46 schließt sich ein hülsenförmiger Fortsatz 48 der Innenhülse 12 und der Außenhülse 28 an.

In Figur 6 ist eine vierte Ausführungsform der Innenhülse 12 und der Außenhülse 28 dargestellt, die sich von der dritten Ausführungsform dadurch unterscheidet, dass der hülsenförmige Fortsatz 48 der Innenhülse 12 radial nach außen versetzt und der hülsenförmige Fortsatz 48 der Außenhülse 28 radial nach innen versetzt ist.

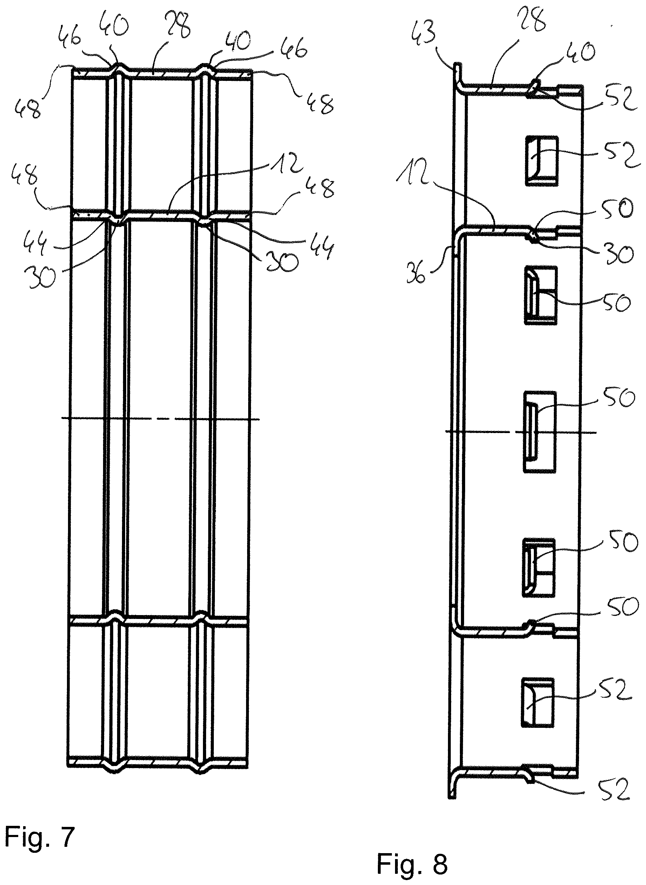

In Figur 7 ist eine fünfte Ausführungsform der Innenhülse 12 und der Außenhülse 28 dargestellt, die sich insbesondere von der dritten Ausführungsform dadurch unterscheidet, dass die Innenhülse 12 zwei erste Sicken 44 und die Außenhülse 28 zwei zweite Sicken 46 aufweist, wobei sich an jede Sicke 44, 46 ein hülsenförmiger Fortsatz 48 anschließt.

In Figur 8 ist eine sechste Ausführungsform der Innenhülse 12 und der Außenhülse 28 dargestellt, die sich von den anderen Ausführungsformen dadurch unterscheidet, dass die erste Umformung 30 aus teilweise ausgestanzten, radial nach innen gebogenen ersten Abschnitten 50 gebildet ist und die zweite Umformung 40 aus teilweise ausgestanzten, radial nach außen gebogenen zweiten Abschnitten 52 gebildet ist. Die Abschnitte 50, 52 sind in äquidistanten Abständen über den Umfang der Innenhülse 12 und der Außenhülse 28 angeordnet.

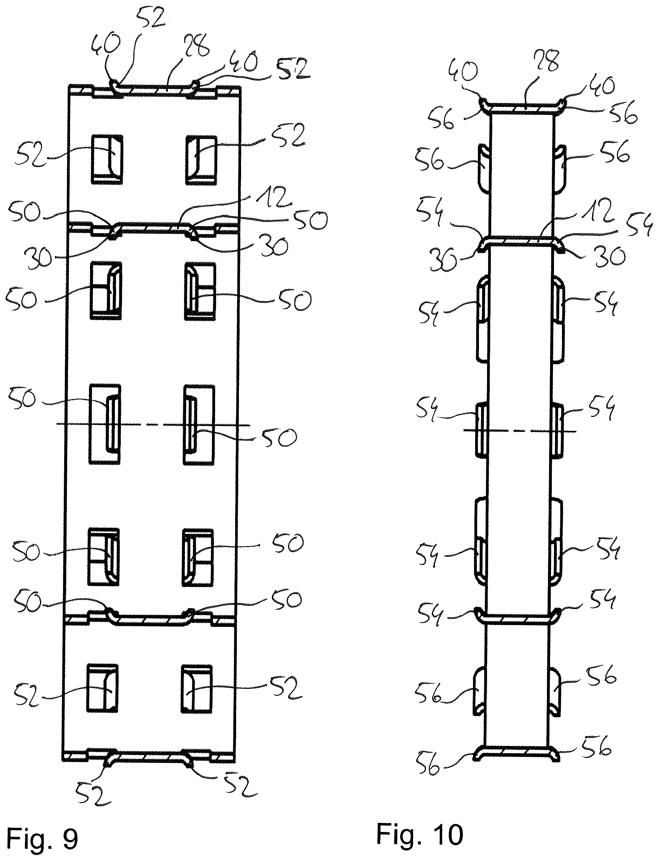

In Figur 9 ist eine siebte Ausführungsform der Innenhülse 12 und der Außenhülse 28 dargestellt, die sich von der sechsten Ausführungsform dadurch unterscheidet, dass die Innenhülse 12 zwei teilweise ausgestanzte, radial nach innen gebogene erste Abschnitte 50 und die Außenhülse 28 zwei teilweise ausgestanzte, radial nach außen gebogene zweite Abschnitte 52 aufweist.

In Figur 10 ist eine achte Ausführungsform der Innenhülse 12 und der Außenhülse 28 dargestellt, die sich von den anderen Ausführungsformen dadurch unterscheidet, dass die erste Umformung 30 aus radial nach innen gebogenen ersten Randlappen 54 gebildet ist und die zweite Umformung 40 aus radial nach außen gebogenen zweiten Randlappen 56 gebildet ist. Die Randlappen 54, 56 sind in äquidistanten Abständen über den Umfang der Innenhülse 12 und der Außenhülse 28 angeordnet. Die Randlappen 54, 56 sind an den Stirnseiten der Innenhülse 12 und der Außenhülse 28 angeordnet und materialeinheitlich mit der Innenhülse 12 und der Außenhülse 28 verbunden. Die Randlappen 54, 56 sind rechteckförmige Vorsprünge der Innenhülse 12 und der Außenhülse 28.

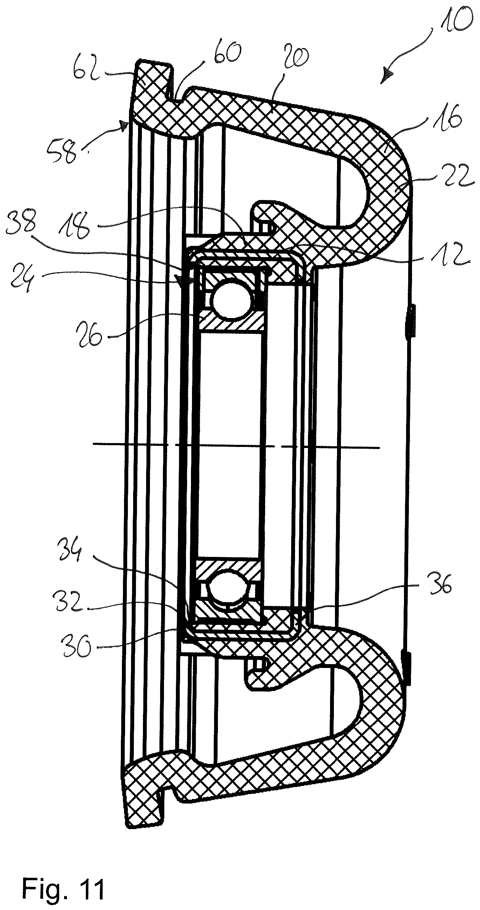

In Figur 11 ist eine zweite Ausführungsform des Wellenlagers 10 ohne Außenkörper 14 gezeigt, die sich von der ersten Ausführungsform in der Ausgestaltung des Elastomerkörpers 16 und in der fehlenden Außenhülse 28 unterscheidet.

Der zweite Schenkel 20 des Elastomerkörpers 16 weist einen Befestigungsabschnitt 58 auf, der eine umlaufende Vertiefung 60 und einen Bundabschnitt 62 umfasst. Über den Befestigungsabschnitt 52 erfolgt die Befestigung des Elastomerkörpers 16 an einem Außenkörper. Hierzu wird zunächst der zweite Schenkel 20 zusammengedrückt, und der Elastomerkörper 16 wird in den Außenkörper eingesetzt, wobei ein im Außenkörper ausgebildeter Vorsprung in die umlaufende Vertiefung 60 eingreift und der Bundabschnitt 62 an einer Stirnseite des Außenkörpers 14 anliegt. Zur Sicherung des Elastomerkörpers 14 vor einem Herausziehen aus dem Außenkörper wird ein nicht dargestellter Sicherungsring auf den Befestigungsabschnitt 58 aufgepresst.

Die in den Figuren dargestellten Ausführungsformen für die Innenhülse 12 und für die Außenhülse 28 können beliebig miteinander kombiniert werden, solange die Kombinationen unter den vorliegenden Ansprüche fallen. So kann beispielsweise eine Innenhülse 12 gemäß einer ersten Ausführungsform mit einer Außenhülse 28 gemäß einer sechsten Ausführungsform miteinander kombiniert werden, oder eine Innenhülse 12 gemäß einer achten Ausführungsform kann mit einer Außenhülse 28 gemäß einer ersten Ausführungsform kombiniert werden.

### Bezugszeichenliste

- 10: Wellenlager
- 12: Innenhülse
- 14: Außenkörper
- 16: Elastomerkörper
- 18: erster Schenkel
- 20: zweiter Schenkel
- 22: Falte
- 24: Aufnahmeöffnung
- 26: Lagerelement
- 28: Außenhülse
- 30: erste Umformung
- 32: erster Randabschnitt
- 34: Scherspalt
- 36: erster Schenkelabschnitt
- 38: Elastomerwulst
- 40: zweite Umformung
- 42: zweiter Randabschnitt
- 43: zweiter Schenkelabschnitt
- 44: erste Sicke
- 46: zweite Sicke
- 48: hülsenförmiger Fortsatz
- 50: erster Abschnitt
- 52: zweiter Abschnitt
- 54: erster Randlappen
- 56: zweiter Randlappen
- 58: Befestigungsabschnitt
- 60: Vertiefung
- 62: Bundabschnitt

- d_{I1}: Innendurchmesser der ersten Umformung
- D_{AL}: Außendurchmesser des Lagerelements
- d_{IS}: Innendurchmesser des ersten Schenklabschnitts
- D_{A2}: Außendurchmesser der zweiten Umformung
- d_{IA}: Innendurchmesser des Außenkörpers
- D_{AS}: Außendurchmesser des zweiten Schenkelabschnitts

- D_{AL}: Außendurchmesser des Lagerelements
- d_{IS}: Innendurchmesser des ersten Schenklabschnitts
- D_{A2}: Außendurchmesser der zweiten Umformung
- d_{IA}: Innendurchmesser des Außenkörpers
- D_{AS}: Außendurchmesser des zweiten Schenkelabschnitts

## Patentansprüche

1. Wellenlager (10) zur Lagerung einer Welle eines Kraftfahrzeugs, aufweisend eine Innenhülse (12), einen die Innenhülse (12) unter Ausbildung eines Abstandes umgebenden Außenkörper (14), einen Elastomerkörper (16), der die Innenhülse (12) und den Außenkörper (14) elastisch miteinander verbindet, und ein Lagerelement (26), wobei die Innenhülse (12) in den Elastomerkörper (16) eingebettet ist und eine Aufnahmeöffnung (24) zum Einpressen eines Lagerelementes (26) bildet, wobei die Innenhülse (12) wenigstens eine erste Umformung (30) aufweist, die derart radial nach innen gerichtet ist, dass zwischen der ersten Umformung (30) und dem Lagerelement (26) ein Scherspalt (34) gebildet ist,
**dadurch gekennzeichnet, dass**
ein Innendurchmesser (d_{I1}) der ersten Umformung (30) gleich oder größer als ein Außendurchmesser (D_{AL}) des Lagerelementes (26) ist, wobei beim Einpressen des Lagerelementes (26) in die Aufnahmeöffnung (24), das Elastomer des Elastomerkörpers (16) verdrängt wird und entgegen der Einpressrichtung einen Elastomerwulst (38) innerhalb des Scherspalts (34) gebildet wird, wobei der innerhalb des Scherspaltes (34) beim Einpressen des Lagerelementes (26) gebildete Elastomerwulst (38) komprimierbar ist.

2. Wellenlager (10) nach Anspruch 1, **dadurch gekennzeichnet, dass** die Innenhülse (12) zwei erste Umformungen (30) aufweist.

3. Wellenlager (10) nach einem der vorhergehenden Ansprüche, **dadurch gekennzeichnet, dass** in den Elastomerkörper (16) eine Außenhülse (28) eingebettet ist, die eine zweite Umformung (40) aufweist, die derart radial nach außen gerichtet ist, dass zwischen der zweiten Umformung (40) und dem Außenkörper (14) ein Scherspalt (34) gebildet ist, wobei innerhalb des Scherspaltes (34) ein beim Einpressen des Elastomerkörpers (16) in den Außenkörper (14) gebildeter Elastomerwulst (38) komprimierbar ist.

4. Wellenlager (10) nach Anspruch 3, **dadurch gekennzeichnet, dass** ein Außendurchmesser (D_{A2}) der zweiten Umformung (40) gleich oder kleiner als ein Innendurchmesser (d_{IA}) des Außenkörpers (14) ist.

5. Wellenlager (10) nach Anspruch 3 oder 4, **dadurch gekennzeichnet, dass** die Außenhülse (28) zwei zweite Umformungen (40) aufweist.

6. Wellenlager (10) nach einem der Ansprüche 3 bis 5, **dadurch gekennzeichnet, dass** die erste Umformung (30) und/oder die zweite Umformung (40) ein umgebogener Randabschnitt (32, 42) ist.

7. Wellenlager (10) nach einem der Ansprüche 3 bis 6, **dadurch gekennzeichnet, dass** die erste Umformung (30) und/oder die zweite Umformung (40) eine Sicke (44, 46) ist.

8. Wellenlager (10) nach einem der Ansprüche 3 bis 7, **dadurch gekennzeichnet, dass** die erste Umformung (30) und/oder die zweite Umformung (40) aus Abschnitten (50, 52) gebildet ist, die teilweise ausgestanzt und umgebogenen sind.

9. Wellenlager (10) nach einem der Ansprüche 3 bis 8, **dadurch gekennzeichnet, dass** die erste Umformung (30) und/oder die zweite Umformung (40) aus umgebogenen Randlappen (54, 56) gebildet ist.

10. Wellenlager (10) nach einem der Ansprüche 3 bis 9, **dadurch gekennzeichnet, dass** die Innenhülse (12) und/oder die Außenhülse (28) einen umgebogenen Schenkelabschnitt (36, 43) aufweist, dessen Innendurchmesser (d_{IS}) kleiner als ein Außendurchmesser (D_{AL}) des Lagerelementes (26) ist und/oder dessen Außendurchmesser (D_{AS}) größer als der Innendurchmesser (d_{IA}) des Außenkörpers (14) ist.

## Claims

1. Shaft bearing (10) for mounting a shaft of a motor vehicle, comprising an inner sleeve (12), an outer body (14) surrounding the inner sleeve (12) to form a clearance, an elastomer body (16) elastically connecting the inner sleeve (12) and the outer body (14), and a bearing element (26), the inner sleeve (12) being embedded in the elastomer body (16) and forming a receiving opening (24) for pressing-in a bearing element (26), the inner sleeve (12) having at least one first deformation (30) which is directed radially inwards in such a way that a shearing gap (34) is formed between the first deformation (30) and the bearing element (26),
**characterised in that**
an inside diameter (d_{I1}) of the first deformation (30) is equal to or greater than an outside diameter (D_{AL}) of the bearing element (26), wherein, when the bearing element (26) is pressed into the receiving opening (24), the elastomer of the elastomer body (16) is displaced and an elastomer ridge (38) is formed within the shear gap (34) against the direction of pressing-in, wherein the elastomer ridge (38) formed within the shear gap (34) during pressing-in of the bearing element (26) is compressible.

2. Shaft bearing (10) according to claim 1, **characterised in that** the inner sleeve (12) has two first deformations (30).

3. Shaft bearing (10) according to one of the preceding claims, **characterized in that** an outer sleeve (28) is embedded in the elastomer body (16), wherein the outer sleeve (28) has a second deformation (40) which is directed radially outwards in such a way that a shearing gap (34) is formed between the second deformation (40) and the outer body (14), wherein an elastomer ridge (38) which is formed within the shearing gap (34) when the elastomer body (16) is pressed into the outer body (14) is compressible.

4. Shaft bearing (10) according to claim 3, **characterised in that** an outer diameter (D_{A2}) of the second deformation (40) is equal to or smaller than an inner diameter (d_{IA}) of the outer body (14).

5. Shaft bearing (10) according to claim 3 or 4, **characterised in that** the outer sleeve (28) has two second deformations (40).

6. Shaft bearing (10) according to any one of claims 3 to 5, **characterised in that** the first deformation (30) and/or the second deformation (40) is a bent-over edge portion (32, 42).

7. Shaft bearing (10) according to any one of claims 3 to 6, **characterized in that** the first deformation (30) and/or the second deformation (40) is a corrugation (44, 46).

8. Shaft bearing (10) according to any one of claims 3 to 7, **characterized in that** the first deformation (30) and/or the second deformation (40) is formed of sections (50, 52) which are partially punched out and bent over.

9. Shaft bearing (10) according to one of claims 3 to 8, **characterized in that** the first deformation (30) and/or the second deformation (40) is formed from bent-over edge tabs (54, 56).

10. Shaft bearing (10) according to one of claims 3 to 9, **characterised in that** the inner sleeve (12) and/or the outer sleeve (28) has a bent-over limb section (36, 43), the inner diameter (d_{IS}) of the limb section is smaller than an outer diameter (D_{AL}) of the bearing element (26) and/or the outer diameter (D_{AS}) of the limb section is larger than the inner diameter (d_{IA}) of the outer body (14).

## Revendications

1. Palier d'arbre (10) pour le montage d'un arbre d'un véhicule automobile, comprenant une douille intérieure (12), un corps extérieur (14) entourant la douille intérieure (12) en formant un espacement, un corps élastomère (16) qui relie élastiquement entre eux la douille intérieure (12) et le corps extérieur (14), et un élément de palier (26), la douille intérieure (12) étant encastrée dans le corps élastomère (16) et formant une ouverture de réception (24) pour enfoncer un élément de palier (26), la douille intérieure (12) présentant au moins une première déformation (30) qui est dirigée radialement vers l'intérieur de telle sorte qu'une fente de cisaillement (34) est formée entre la première déformation (30) et l'élément de palier (26)
**caractérisé en ce que**
un diamètre intérieur (d_{I1}) de la première déformation (30) est égal ou supérieur à un diamètre extérieur (D_{AL}) de l'élément de palier (26), dans lequel, lorsque l'élément de palier (26) est pressé dans l'ouverture de réception (24), l'élastomère du corps élastomère (16) est déplacé et un bourrelet d'élastomère (38) est formé à l'intérieur de la fente de cisaillement (34) à l'encontre de la direction d'enfoncement, dans lequel le bourrelet d'élastomère (38) formé à l'intérieur de la fente de cisaillement (34) pendant l'enfoncement de l'élément de palier (26) est compressible.

2. Palier d'arbre (10) selon la revendication 1, **caractérisé en ce que** la douille intérieure (12) présente deux premières déformations (30).

3. Palier d'arbre (10) selon l'une des revendications précédentes, **caractérisé en ce qu'**une douille extérieure (28) est incorporée dans le corps élastomère (16), laquelle douille extérieure (28) présente une deuxième déformation (40) qui est dirigée radialement vers l'extérieur de telle sorte qu'une fente de cisaillement (34) est formée entre la deuxième déformation (40) et le corps extérieur (14), un bourrelet d'élastomère (38) qui est formé lorsque le corps d'élastomère (16) est pressé dans le corps extérieur (14) à l'intérieur de la fente de cisaillement (34) est compressible.

4. Palier d'arbre (10) selon la revendication 3, **caractérisé en ce qu'**un diamètre extérieur (D_{A2}) de la deuxième déformation (40) est égale ou inférieure à un diamètre intérieur (d_{IA}) du corps extérieur (14).

5. Palier d'arbre (10) selon la revendication 3 ou 4, **caractérisé en ce que** la douille extérieur (28) présente deux secondes déformations (40).

6. Palier d'arbre (10) selon l'une quelconque des revendications 3 à 5, **caractérisé en ce que** la première déformation (30) et/ou la deuxième déformation (40) est une partie de bord pliée (32, 42).

7. Palier d'arbre (10) selon l'une quelconque des revendications 3 à 6, **caractérisé en ce que** la première déformation (30) et/ou la deuxième déformation (40) est une nervure (44, 46).

8. Palier d'arbre (10) selon l'une quelconque des revendications 3 à 7, **caractérisé en ce que** la première déformation (30) et/ou la deuxième déformation (40) est formé de sections (50, 52) qui sont partiellement poinçonnées et repliées.

9. Palier d'arbre (10) selon l'une quelconque des revendications 3 à 8, **caractérisé en ce que** la première déformation (30) et/ou la deuxième déformation (40) est formé à partir de languettes de bord repliées (54, 56).

10. Palier d'arbre (10) selon l'une des revendications 3 à 9, **caractérisé en ce que** la douille intérieure (12) et/ou la douille extérieure (28) présente une section de branche coudée (36, 43) dont le diamètre intérieur (d_{IS}) est inférieur à un diamètre extérieur (D_{AL}) de l'élément de palier (26) et/ou dont le diamètre extérieur (D_{AS}) est supérieur au diamètre intérieur (d_{IA}) du corps extérieur (14).
